# EUROPEAN PATENT SPECIFICATION

(11) **EP 4 192 900 B1**
(45) Date of publication and mention of the grant of the patent: **29.01.2025**
(21) Application number: 21758345.9
(22) Date of filing: 03.08.2021
(51) Int. Cl.: C08G 63/685, C08G 18/46, C08G 63/91, C09D 175/06, C09J 175/06, C08G 18/73, C08G 18/79

(54) **BRANCHED POLYASPARTIC ACID ESTERS AND THEIR PREPARATION**
VERZWEIGTE POLYASPARAGINSÄUREESTER UND IHRE HERSTELLUNG
ESTERS D'ACIDE POLYASPARTIQUE RAMIFIÉ ET LEUR PRÉPARATION

(30) Priority: 04.08.2020 EP 20189411
(43) Date of publication of application: 14.06.2023
(73) Proprietor: BASF SE, 67056 Ludwigshafen am Rhein (DE)
(72) Inventor: MUELLER-CRISTADORO, Anna Maria, 49448 Lemfoerde (DE); BRUCHMANN, Bernd, 67056 Ludwigshafen (DE); SZWEDA, Dawid, 43-227 Miedzna (PL)
(74) Representative: BASF IP Association
(86) International application number: PCT/EP2021/071681
(87) International publication number: WO 2022/029130

(56) References cited:
- WO-A1-2011/061240
- DE-A1- 4 244 030
- US-A- 5 561 214
- US-A- 5 633 389

## Description

The invention relates to a branched polyester formed by an acid component, a diol component and a polyol component (branched polyaspartic acid ester). The invention further relates to a process for preparing said branched polyester, a reaction product of said branched polyester with a polyisocyanate and the use of said reaction product.

Branched polyaspartic acid esters (PAE) containing secondary amine groups exhibiting moderate reactivity toward isocyanates. The moderate reactivity of these compounds can be of great advantage in applications such as 2K polyurethane/polyurea coatings, glues and epoxy systems.

Polyaspartic acid esters are polymers containing mono-N-substituted aspartic acid units in their structure. Despite the name, these polymers are not synthesized from aspartic acid but from unsaturated polyesters (UPE) and primary amines using the Aza-Michael addition. The product of this reaction contains a polyester backbone with side chains connected to the backbone via secondary amine groups.

US 2005/0059791 A1 describes flexible polyaspartic esters formed, e.g. by the reaction of diethyl maleate and 1,4-butanediol and subsequent addition with polyamines, like 1,6-hexanediamine.

DE 42 44 030 A1 describes amino group containing polyester resins. In example 1 hxanediol-1,6, trimethylolpropane, 1,4-(dihydroxymethyl)cyclohexane, neopentylglycol, adipic acid and maleic anhydride, wherein the molar ratio of diols to triol is 4:1, followed by the reaction with a primary amine.

DE 1 157 773 A1 describes the preparation of polyurethanes from amino polyesters. In example A14 trimethylolpropane, diethylenglycol, adipic acid and maleic anhydride are reacted with each other, wherein the molar ratio of diol to triol is 17:1, followed by reaction with cyclohexylamine.

In US 2,969,335 A reaction products of polyesters and primary amines are described. In example 14 a polyester is formed from a mixture of diethylene glycol, trimethylolpropane and maleic anhydride, wherein the molar ratio of diol to triol is 15:1.

Similar compounds, in form of low molecular weight aspartic acid esters of diethyl maleate and aliphatic diamines, are already produced by Covestro under name Desmophen^{®} NH.

Desmophen^{®} NH products are co-reactants (reactive diluents) for polyisocyanates - allowing for formulation of two-component polyurethane topcoats and solvent-free coating materials.

By changing the structure of amine used for the synthesis of Desmophen^{®} NH the reactivity of secondary amines can be greatly tuned what enables the parameters of pot life and drying time to be adjusted in a broad range.

Even though branched polyaspartic acid esters are known in the art there is a need to provide new branched polyaspartic acids esters having well-balanced properties in coating applications like moderate cure time, UV stability, formation of thin to moderate film thicknesses, high chemical and abrasion resistance and high solid content.

Thus an object of the present invention is to provide such branched polyaspartic acid esters.

This object is achieved by a branched polyester formed by an acid component, a diol component and a polyol component, wherein the acid component comprises an amino dicarboxylic acid of formula (I) 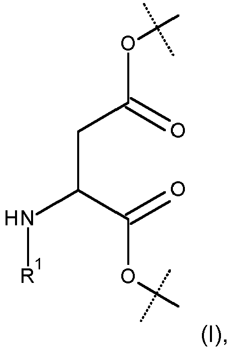
wherein R¹ is a hydrogen or a hydrocarbon having 1 to 20 carbon atoms, and wherein in the hydrocarbon one or more carbon atoms can be replaced by an oxygen, provided that the replaced carbon is not a primary carbon atom and in case of more than one oxygen replacing carbon atoms, at least two carbon atoms are between adjacent oxygen atoms,
wherein the diol component comprises a diol,
wherein the polyol component comprises a polyol having at least three hydroxyl groups, preferably a triol or a tetrol, more preferably a triol,
and wherein the acid component forms carboxylic acid ester groups with the diol component and the polyol component and the dashed lines indicate the bondage to the diol or the polyol via the commonly shared oxygen,
characterized in that the molar ratio of diol component and polyol component is in the range from 2:1 to 1:2.

Surprisingly it was found that the above-mentioned good properties can be found by using a mixture of diol and polyol in a specific ratio, i.e. molar ratio from 2:1 to 1:2, in order to adjust the degree of branching in the branched polyester of the present invention. It was found that the solution viscosities of the branched polyesters are remarkably low. This helps to reduce the amount of solvent for a given viscosity and generates higher solid contents in the final formulation. This in turn results in improved properties of a polyurethane material after reaction with a polyisocyanate, e.g. with regard to viscosity and reactivity of a coating resulting from this polyurethane in view of drying and hardening.

The branched polyaspartic acid esters of the present invention have typically molar masses Mn between 500 and 5000 g/mol. The branched polyaspartic acid esters of the present invention are soluble in butyl acetate at 65wt% and preferably having as low viscosity as possible. Preferably, the branched polyaspartic acid esters of the present invention show moderate and ideally tunable reactivity and may have a total acid number close to zero.

The branched polyester of the present invention is a polyester, wherein the carboxylic acid ester groups are formed by an acid component. Said acid component comprises, preferably consists of, an amino dicarboxylic acid of formula (I). This amino dicarboxylic acid can also be named as aspartic acid derivative with R¹ as N-substituent. Even not preferred the acid component can also comprise more than one amino dicarboxylic acid. Furthermore it is possible that the branched polyester of the present invention comprises further acid components like monocarboxylic acids and dicarboxylic acids, like oxalic acid, malonic acid or adipic acid, especially unsaturated dicarboxylic acids as starting material for the formation of amino dicarboxylic acids of formula (I), preferably maleic acid or fumaric acid. The carboxylic acid groups of these acids can be reacted or unreacted. Preferably, no further carboxylic acids or dicarboxylic acids are comprised, except unreacted starting material.

R¹ is hydrogen or a hydrocarbon having 1 to 20 carbon atoms. Preferably R¹ is other than hydrogen. In case R¹ is other than hydrogen, R¹ can be acyclic or cyclic. In case R¹ is acyclic it can be straight-chained or branched and saturated or unsaturated. Preferably, R¹ is saturated, i.e. an alkyl group with 1 to 20 carbon atoms, wherein the alkyl group is straight-chained or branched, preferably branched. In case R¹ is cyclic, R¹ can have one or more rings, which are linked to each other or can be fused. Cyclic R¹ can be saturated or unsaturated, especially aromatic. However it is preferred that R¹ is saturated and only has one ring.

The acyclic hydrocarbon can be substituted with one or more cyclic hydrocarbons, both forming R¹. It is clear that in such situation the total number of carbons is the sum of acyclic carbons and cyclic carbons and does not exceed the number 20. An example is cyclohexylmethyl having 7 carbon atoms.

The cyclic hydrocarbon can be substituted with one or more acyclic hydrocarbons, both forming R¹. It is clear that in such situation the total number of carbons is the sum of cyclic carbons and acyclic carbons and does not exceed the number 20. An example is methylcyclohexyl having 7 carbon atoms.

In the hydrocarbon of R¹ one or more carbon atoms can be replaced by oxygen, provided that the replaced carbon is not a primary carbon atom. Thus, the oxygen can only form an ether group and not a hydroxyl group.

Furthermore, in case more than one oxygen replaces carbon atoms at least two carbon atoms are between adjacent oxygen atoms in order to prevent -O-C-O- structures or -O-O- structures.

Preferably, R¹ is a hydrocarbon atom having 3 to 10 carbon atoms, wherein one or two carbon atoms can be replaced by an oxygen atom. More preferably, R¹ is selected from the group consisting of n-butyl, tert.-butyl, n-pentyl, n-octyl, 2-ethyl-1-hexyl, cyclohexyl, 2-methylcyclohexyl and 3-methoxypropyl, more preferably R¹ is 2-ethyl-1-hexyl.

The diol component comprises, preferably consists of, a diol. The term diol refers to an organic compound showing two hydroxyl groups as functional groups. The diol can be a small monomeric molecule or a polymeric molecule showing repeating units. Exemplary diols are ethylene glycol, propane-1,2-diol, propane-1,3-diol, 2,2-dimethyl-propane-1,3-diol, butane-1,2-diol, butane-1,3-diol, butane-1,4-diol, butane-2,3-diol, pentane-1,2-diol, pentane-1,3-diol, pentane-1,4-diol, pentane-1,5-diol, pentane-2,3-diol, pentane-2,4-diol, hexane-1,2-diol, hexane-1,3-diol, hexane-1,4-diol, hexane-1,5-diol, hexane-1,6-diol, hexane-2,5-diol, heptane-1,2-diol 1,7-heptanediol, 1,8-octanediol, 1,2-octanediol, 1,9-nonanediol, 1,10-decanediol, 1,2-decanediol, 1,12-dodecanediol, 1,2-dodecanediol, 1,5-hexadiene-3,4-diol, cyclopentanediols, cyclohexanediols, 2-methyl-2,4-pentanediol, 2,4-dimethyl-2,4-pentanediol, 2-ethyl-1,3-hexanediol, 2,5-dimethyl-2,5-hexanediol, 2,2,4-trimethyl-1,3-pentanediol, pinacol, diethylene glycol, triethylene glycol, dipropylene glycol, tripropylene glycol, polyethylene glycols HO(CH₂CH₂O)ₙ-H or polypropylene glycols HO(CH(CH₃)CH₂O)ₙ-H or mixtures of two or more representatives of the above compounds, n being an integer from 4 to 10. One or else both of the hydroxyl groups in the aforementioned diols can also be substituted by SH groups. Preference is given to triethylene glycol, diethylene glycol, 1,4-butanediol, 1,6-hexandiol, neopentylglycol, 2,5-dimethyl-2,5-hexandiol and 2-ethyl-1,3-hexandiol.

The polyol component comprises a polyol having at least three hydroxyl groups. Preferably, the polyol comprises a triol or a tetrol or a triol and a tetrol, more preferably comprises a triol or tetrol, even more preferably comprises a triol. Preferably, the polyol component consists of a polyol having at least three hydroxyl groups. Preferably, the polyol consists of a triol or a tetrol or a triol and a tetrol, more preferably consists of a triol or tetrol, even more preferably consists of a triol. The term triol refers to an organic compound showing three hydroxyl groups as functional groups. The triol can be a small monomeric molecule or a polymeric molecule showing repeating units. Exemplary triols are glycerol, butane-1,2,4-triol, n-pentane-1,2,5-triol, n-pentane-1,3,5-triol, n-hexane-1,2,6-triol, n-hexane-1,2,5-triol, n-hexane-1,3,6-triol, trimethylolbutane, trimethylolpropane, trimethylolethane, trimethylolmethane or mixtures of the above mentioned trifunctional alcohols. Furthermore alcoxylates thereof can be used, like ethoxylates, propoxylates or mixed ethoxylate/propoxylate oligomers and polymers based on the aforementioned triols. Preference is given to glycerol and trimethylolpropane, more preferably the triol is trimethylolpropane.

The term tetrol refers to an organic compound showing four hydroxyl groups as functional groups. The tetrol can be a small monomeric molecule or a polymeric molecule showing repeating units. Exemplary tetrols are pentaerythritol, diglycerol, trimethylolpropane-dimer, erythritol, or ethoxylates, propoxylates or mixed ethoxylate/propoxylate oligomers and polymers based on the aforementioned tetrols as starting components. More preferably the tetrol is pentaerythritol or diglycerol.

Preferably, the molar ratio of diol component and polyol component is in the range from 1.5:1 to 1 :1.5, more preferably from 1.2 : 1 to 1 : 1.2, even more preferably from 1.1 :1 to 1 : 1.1, especially 1:1.

Preferably, the molar ratio of acid component to the sum of diol component and polyol component is in the range from 1:2 to 2:1, more preferably from 1.5 : 1 to 1 : 1.5, even more preferably from 1.2 : 1 to 1 : 1.2, even more preferably from 1.1 :1 to 1 : 1.1, especially 1:1.

By way of example derivatives of maleic acid as activated maleic acid (e.g. diethyl maleate and maleic anhydride) can be chosen as the source of double bonds as cis-double bonds are much more reactive toward Aza-Michael addition of amines than the trans-double bonds. However, also fumaric acid can be used.

In an exemplary first stage of the synthesis the polycondensation of maleic acid derivatives with chosen diols (HO-R³-OH) and triols (R²(OH)₃) leads to branched unsaturated polyesters structures (certain amounts of maleic acid is converted to trans configuration):

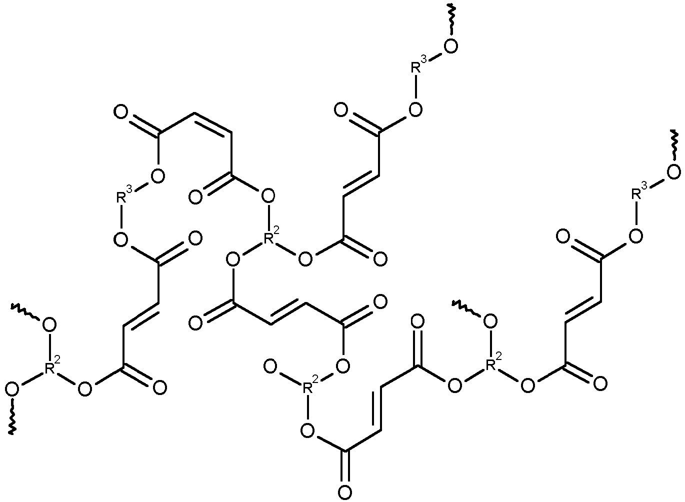

In an exemplary second stage of synthesis the branched unsaturated polyesters are modified with primary monoamines R¹-NH₂ via the Aza-Michael addition:

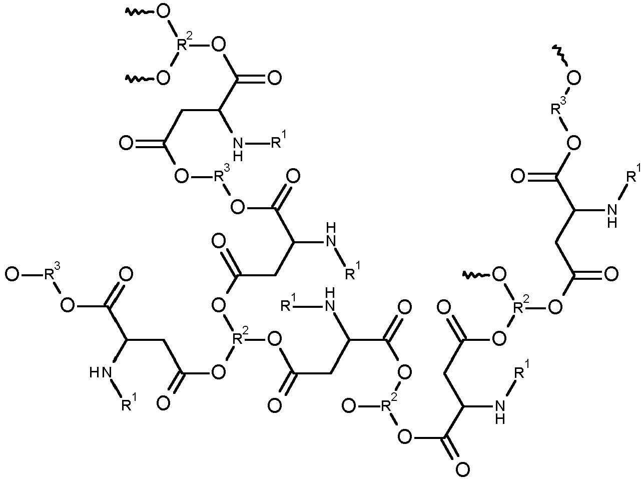

Accordingly, another aspect of the present invention is a process for preparing a branched polyester of the present invention, comprising the steps
(a) reacting an acid component with a mixture of a diol component and a polyol component, wherein the acid component comprises an activated maleic acid or activated fumaric acid, preferably an activated maleic acid, wherein the diol component comprises a diol, wherein the polyol component comprises a polyol
   and wherein the acid component forms carboxylic acid ester groups with the diol component and the polyol component, characterized in that the molar ratio of diol component and polyol component is in the range from 2:1 to 1:2;
(b) reacting the resulting product from step (a) with R¹-NH₂ in an aza-Michael addition reaction, wherein R¹ has the meaning as indicated above, resulting in the branched polyester.

Preferably, the acid component consists of one activated maleic acid or one activated fumaric acid, more preferably one activated maleic acid. Preferably, the activated maleic acid is maleic anhydride, a diester of maleic acid with a C₁₋₄ alkyl alcohol or a dihalide of maleic acid, more preferably maleic anhydride. The same applies to fumaric acid.

The branched polyester of the present invention can be reacted with a polyisocyanate. Accordingly, another aspect of the present invention is a reaction product of the branched polyester of the present with an isocyanate with functionality of 2 (diisocyanate) or higher than 2 (a polyisocyanate). Said reaction product can be used in coating applications.

According to the present invention the term "polyisocyanate" refers to a monomeric oligomeric of polymeric compound having at least two isocyanate groups. Examples of polyisocyanates are aliphatic diisocyanates and/or cycloaliphatic diisocyanates, for example tri-, tetra-, penta-, hexa-, hepta- and/or octamethylene diisocyanate, 2-methylpentamethylene 1,5-diisocyanate, 2-ethyltetramethylene 1,4-diisocyanate, hexamethylene 1,6-diisocyanate (HDI), pentamethylene 1,5-diisocyanate, butylene 1,4-diisocyanate, trimethylhexamethylene 1,6-diisocyanate, 1-isocyanato-3,3,5-trimethyl-5-isocyanatomethylcyclohexane (isophorone diisocyanate, IPDI), 1,4- and/or 1,3-bis(isocyanatomethyl)cyclohexane (HXDI), cyclohexane 1,4-diisocyanate, 1-methylcyclohexane 2,4- and/or 2,6-diisocyanate, methylene dicyclohexyl 4,4'-, 2,4'- and/or 2,2'-diisocyanate (H12MDI).

Preferred aliphatic polyisocyanates are pentamethylene 1,5-diisocyanate, hexamethylene 1,6-diisocyanate (HDI), 1-isocyanato-3,3,5-trimethyl-5-isocyanatomethylcyclohexane and methylene dicyclohexyl 4,4'-, 2,4'- and/or 2,2'-diisocyanate (H12MDI).

Suitable aromatic diisocyanates are especially naphthylene 1,5-diisocyanate (NDI), toluylene 2,4- and/or 2,6-diisocyanate (TDI), diphenylmethane 2,2'-, 2,4'- and/or 4,4'-diisocyanate (MDI), 3,3'-dimethyl-4,4'-diisocyanatodiphenyl (TODI), p-phenylene diisocyanate (PDI), diphenylethane 4,4'-diisocyanate (EDI) and polymeric diphenylmethane diisocyanate (Polymer-MDI).

It is also possible in the context of the present invention to use higher-functionality isocyanates, by way of example triisocyanates, for example triphenylmethane 4,4',4"-triisocyanate, and also the isocyanurates of the aforementioned diisocyanates, and the oligomers obtainable by partial reaction of diisocyanates with water, for example the ureas and biurets of the aforementioned diisocyanates, and additionally isocyanate group functionalized oligomers obtainable by controlled reaction of di- or polyisocyanates with polyols having an average of two or more than two and preferably three or more hydroxyl groups, so called isocyanate terminated polyurethane prepolymers. In a preferred embodiment the polyisocyanate is HDI isocyanurate.

Step (a) of the process for preparing the branched polyester of the present invention is well known in the art and described, e.g. in WO 03/093 343 A1, WO 2005/037 893 A1 or WO 2005/118677 A1.

The reaction of step (a) can be conducted solvent free or in the presence of a solvent. Suitable examples include hydrocarbons such as paraffins or aromatics. Particularly suitable paraffins are n-heptane and cyclohexane. Particularly suitable aromatics are toluene, ortho-xylene, metaxylene, para-xylene, xylene isomer mixture, ethylbenzene, chlorobenzene and ortho- and metadichlorobenzene. Additional solvents which are especially suitable in the absence of acidic catalysts include the following: ethers such as dioxane or tetrahydrofuran and ketones such as methyl ethyl ketone and methyl isobutyl ketone, for example.

The amount of added solvent can be at least 0.1% by weight, based on the mass of the starting materials to be reacted that are used, preferably at least 1% by weight and more preferably at least 10% by weight. It is also possible to employ excesses of solvent, based on the mass of starting materials to be reacted that are employed, such as from 1.01 to 10 times, for example. Solvent amounts of more than 100 times, based on the mass of starting materials to be reacted that are employed, are not advantageous, since at significantly lower concentrations of the reactants the reaction rate falls markedly, leading to uneconomically long reaction times.

However, it is preferred that the reaction between the activated maleic acid and the mixture of diol(s) and polyol(s) is carried out solvent-free.

To carry out step (a) of the process of the invention it is possible to operate in the presence of a water remover additive which is added at the beginning of the reaction. Suitable examples include molecular sieves, particularly molecular sieve 4 Ȧ, MgSO₄ and Na₂SO₄. It is also possible during the reaction to add further water remover additive or to replace water remover additive by fresh water remover additive. It is also possible to distill off water or alcohol formed during the reaction and to use, for example, a water separator.

Step (a) of the process of the invention can be conducted in the absence of acidic catalysts. It is preferred to operate in the presence of an acidic inorganic, organometallic or organic catalyst or mixtures of two or more acidic inorganic, organometallic or organic catalysts.

Acidic inorganic catalysts for the purposes of the present invention include for example sulfuric acid, phosphoric acid, phosphonic acid, hypophosphorous acid, aluminum sulfate hydrate, alum, acidic silica gel (pH=6, in particular =5) and acidic alumina. Also possible for use are, for example, aluminum compounds of the general formula Al(OR)₃ and titanates of the general formula Ti(OR)₄ as acidic inorganic catalysts, the radicals R each being able to be identical or different and being chosen independently of one another from C₁-C₁₀-alkyl radicals, such as methyl, ethyl, n-propyl, isopropyl, n-butyl, isobutyl, sec-butyl, tert-butyl, n-pentyl, isopentyl, sec-pentyl, neopentyl, 1 ,2-dimethylpropyl, isoamyl, n-hexyl, isohexyl, sec-hexyl, n-heptyl, isoheptyl, n-octyl, 2-ethylhexyl, n-nonyl or n-decyl,
C₃-C₁₂-cycloalkyl radicals, examples being cyclopropyl, cyclobutyl, cyclopentyl, cyclohexyl, cycloheptyl, cyclooctyl, cyclononyl, cyclodecyl, cycloundecyl and cyclododecyl; preference is given to cyclopentyl, cyclohexyl and cycloheptyl.

Preferably the radicals R in Al(OR)₃ and Ti(OR)₄ are each identical and chosen from isopropyl or 2-ethylhexyl.

Preferred acidic organometallic catalysts are chosen for example from dialkyltin oxides R₂SnO, where R is as defined above. One particularly preferred representative of acidic organometallic catalysts is di-n-butyltin oxide, available commercially in the form of oxo-tin.

Preferred acidic organic catalysts are acidic organic compounds containing, for example, phosphate groups, sulfonic acid groups, sulfate groups or phosphonic acid groups. Particular preference is given to sulfonic acids such as para-toluenesulfonic acid, for example. Acidic ion exchangers can also be used as acidic organic catalysts, examples being polystyrene resins which contain sulfonic acid groups and have been crosslinked with about 2 mol % of divinylbenzene.

Combinations of two or more of the aforementioned catalysts can also be used. Another possibility is to use those organic or organometallic or else inorganic catalysts which are in the form of discrete molecules, in an immobilized form.

If the use of acidic inorganic, organometallic or organic catalysts is desired, the amount of catalyst used in accordance with the invention is from 0.01 to 10% by weight, preferably from 0.02 to 2% by weight.

Step (a) of the process of the invention is preferably carried out under an inert gas atmosphere: that is, for example, under carbon dioxide, nitrogen or noble gas, among which argon in particular may be mentioned.

Step (a) of the process of the invention is conducted at temperatures of from 80°C to 200°C. It is preferred to operate at temperatures of from 130°C to 180°C., in particular from 130°C to 150°C. or below. Particular preference is given to maximum temperatures up to 145°C, very preferably up to 140°C.

The pressure conditions in step (a) of the process of the invention are not critical per se. It is possible to operate at a considerably reduced pressure, at from 10 to 500 mbar, for example. Step (a) of the invention can also be conducted at pressures above 500 mbar. For reasons of simplicity it is preferred to carry out the reaction at atmospheric pressure, although it can also be carried out at a slightly elevated pressure, up to 1200 mbar, for example. Working under a significantly increased pressure is a further possibility, at pressures up to 10 bar, for example. Reaction at atmospheric pressure is preferred.

The reaction time of step (a) of the process of the invention is usually from 10 minutes to 48 hours, preferably from 30 minutes to 24 hours and more preferably from one to 20 hours.

After the end of the reaction the reaction product of step (a) can be isolated easily, for example, by removing the catalyst by filtration of the solution and concentrating the filtrate, usually under reduced pressure. Further highly suitable workup methods include precipitation following the addition of water and subsequent washing and drying.

The reaction products of step (a) typically have a molecular weight Mn (GPC in THF or DMAc) of from 500 to 10 000 g/mol, preferably from 600 to 5 000, more preferably from 700 to 2 500 and very preferably from 750 to 2000 g/mol. They are usually thus readily soluble; that is, clear solutions can be prepared with up to 50% by weight, in some cases even up to 80% by weight, of the polyesters of the invention in tetrahydrofuran (TH F), n-butyl acetate, ethanol and numerous other solvents, without gel particles being detectable to the naked eye.

Typically, the glass transition temperatures of branched unsaturated polyesters from step (a) ranges from -5°C to 50°C.

Step (b) of the process for preparing the branched polyester of the present invention is based on an aza-Michael addition, which is well known in the art and described e.g. in US 2005/0059791 A1, DE 42 44 030 A1, DE 1 157 773 A1 and US 2,969,335 A.

The reaction of step (b) can be carried out in a solvent, like tetrahydrofuran (THF), n-butyl acetate, ethanol and numerous other solvents capable of solving the reaction product from step (a). Preference is given to n-butyl acetate.

The reaction temperature is not critical and room temperature is preferred. However as the aza-Michael addition is exothermic the temperature can increase during reaction.

The branched polyesters of the present invention are, in addition to the amino-group functionalities, carboxy-terminated, carboxy- and hydroxyl-terminated and, preferably, hydroxyl-terminated and can be used with advantage for preparing, for example, adhesives, printing inks, coatings, foams, coverings and paints.

A further aspect of the present invention is the use of the branched polyesters of the invention for preparing polyurethanes. Preference is given to the use of the hydroxyl-terminated branched polyesters of the invention for preparing polyurethanes.

A further aspect of the present invention is the use of the branched polyesters of the invention and also of the polyurethanes prepared from the branched polyesters as a component of adhesives, coatings, foams, coverings and paints.

A further aspect of the present invention are printing inks, adhesives, coatings, foams, coverings and paints comprising the branched polyesters of the invention or polyurethane products prepared from the branched polyesters of the invention.

Polyurethanes of the present invention are suitable for the modification of surface properties of one-, two- and three-dimensional objects, like shaped bodies.

According to the present invention the term "polyurethane" also encompasses polymers having not only urethane groups but also other groups resulting from reacting di- or polyisocyanates with compounds having an active hydrogen resulting in urea-, allophanate-, biuret-, carbodiimid-, amide-, uretonimine-, uretdione-, isocyanurate- or oxazolidone groups. The term "polyurethane" especially encompasses polyurea-polyurethanes. Reactive groups are especially hydroxyl-, amino-, imino-, and carboxylic groups.

A further preferred aspect of the present invention are printing inks, especially packaging inks for flexographic and/or gravure printing, which comprises at least one solvent or a mixture of different solvents, at least one colorant, at least one polymeric binder and, optionally, further additives, at least one of the polymeric binders being a branched polyester of the invention.

In the context of the present invention the branched polyesters of the invention can also be used in a mixture with other binders. Examples of further binders for the printing inks of the invention include polyvinylbutyral, nitrocellulose, polyamides, polyacrylates or polyacrylate copolymers. The combination of the branched polyesters with nitrocellulose has proven particularly advantageous. The total amount of all binders in the printing ink of the invention is usually 5-35% by weight, preferably 6-30% by weight and more preferably 10-25% by weight, based on the sum of all the constituents. The ratio of branched polyester to the total amount of all binders is usually in the range from 30% by weight to 100% by weight, preferably at least 40% by weight, but the amount of branched polyester should generally not be below 3% by weight, preferably 4% by weight and more preferably 5% by weight relative to the sum of all the constituents of the printing ink.

It is possible to employ an individual solvent or else a mixture of two or more solvents. Solvents suitable in principle are the customary solvents for printing inks, especially packaging inks. Particularly suitable solvents for the printing ink of the invention are alcohols such as, for example, ethanol, 1-propanol, 2-propanol, ethylene glycol, propylene glycol, diethylene glycol, substituted alcohols such as ethoxypropanol, for example, esters such as ethyl acetate, isopropyl acetate, n-propyl or n-butyl acetate, for example. A further solvent suitable in principle is water. A particularly preferred solvent is ethanol or mixtures composed predominantly of ethanol. Among the solvents possible in principle the person skilled in the art will make an appropriate selection in accordance with the solubility properties of the polyester and with the desired properties of the printing ink. It is usual to use from 40 to 80% by weight of solvent relative to the sum of all the constituents of the printing ink.

Colorants which can be used are the customary dyes, in particular customary pigments. Examples are inorganic pigments such as titanium dioxide pigments or iron oxide pigments, interference pigments, carbon blacks, metal powders such as particularly aluminum, brass or copper powder, and also organic pigments such as azo, phthalocyanine or isoindoline pigments. As will be appreciated, it is also possible to use mixtures of different dyes or colorants and also soluble organic dyes. It is usual to use from 5 to 25% by weight of colorant, relative to the sum of all the constituents.

The packaging ink of the invention may optionally comprise further additives and auxiliaries. Examples of additives and auxiliaries are fillers such as calcium carbonate, aluminum oxide hydrate or aluminum silicate or magnesium silicate. Waxes increase the abrasion resistance and serve to enhance the lubricity. Particular examples are polyethylene waxes, oxidized polyethylene waxes, petroleum waxes or ceresin waxes. Fatty acid amides can be used to raise the surface smoothness. Plasticizers increase the elasticity of the dried film. Examples are phthalic esters such as dibutyl phthalate, diisobutyl phthalate, dioctyl phthalate, citric esters or esters of adipic acid. Dispersing assistants can be used to disperse the pigments. In the case of the printing ink of the invention it is possible with advantage to do without adhesion promoters, although this is not intended to indicate that the use of adhesion promoters should be ruled out absolutely. The total amount of all additives and auxiliaries normally does not exceed 20% by weight, relative to the sum of all of the constituents of the printing ink, and is preferably 0-10% by weight.

The packaging ink of the invention can be prepared in a way which is known in principle, by intensive mixing and/or dispersing of the constituents in customary apparatus such as, for example, dissolvers, stirred bore mills or a triple-roll mill. It is advantageous first to prepare a concentrated pigment dispersion with one portion of the components and one portion of the solvent, and later to process this dispersion further to the finished printing ink with further constituents and further solvent.

Another preferred aspect of the present invention are print varnishes which comprise at least one solvent or a mixture of different solvents, at least one polymeric binder and, optionally, further additives, at least one of the polymeric binders being a branched polyester of the invention or polyurethanes thereof, and also the use of the print varnishes of the invention for priming, as a protective varnish and for producing multilayer materials.

The print varnishes of the invention of course contain no colorants, but apart from that have the same constituents as the printing inks of the invention already described. The amounts of the other components increase accordingly.

### Examples

### 1. Methods

### Hydroxyl number (HN)

Hydroxyl numbers (HN) of linear and branched unsaturated polyesters were determined according to ASTM E222 standard using perchloric acid catalyzed method.

### Total acid number (AN)

Total acid numbers (AN) of linear and branched unsaturated polyesters were determined according to ISO 2114:2000 standard.

### Gel Permeation Chromatography (GPC)

GPC measurements of unsaturated polyesters and polyaspartic acid esters were performed in THF or DMAc (with 0.5% LiBr) at RT by PSS Agilent 1200 Series. The nominal solvent flow rate was 1 mL/min. Three SEC columns with a pore size of 100, 1000, and 10000 Å for THF and 30 and 2×1000 Å for DMAc from PSS Polymer Standards were used for fractionation. The refractive index detector G136A and UV/Vis detector G1314B from Agilent Technologies were used. The calibration was carried out with polystyrene as standard for samples in THF and poly(methyl methacrylate) for samples in DMAc. The results were evaluated using WinGPC UniChrom V 8.20 software from Polymer Standards Service GmbH.

### Viscosity measurement

Viscosities of 65 wt% solutions of unsaturated polyesters and polyaspartic acid esters in butyl acetate were measured using Brookfield DV-III Ultra Programmable Rheometer (Brookfield Engineering Laboratories, Inc., 11 Commerce Boulevard, Middleboro, MA 02346 USA). The samples (v= 400 mL) were placed in 600 mL beaker with an inside diameter of d=8.6 cm. The measurements were done using spindle model HA02, at 100 rpm and 21-22°C.

### Thermogravimetric analysis (TGA)

A PerkinElmer Pyris TGA 4000 was used for determination of onset temperatures of decomposition. The samples were heated under air from 50 up to 650 °C with a heating rate of 10 K/ min.

### Differential scanning calorimetry (DSC)

A Netzsch DSC 200 F3 (Erich Netzsch GmbH & Co. Holding KG, Selb, Germany) was used to determine the glass transition temperatures of samples. Samples were heated from -150°C to 150°C at a rate of 10°C/min under a nitrogen atmosphere. Two cooling-heating runs were performed for each sample and the data from the second heating curve was used. The data was analyzed using the Netzsch Proteus Thermal Analysis (Version 4.8.1) software.

### 2. Materials

Maleic anhydride (MAn, ≥99%), diethyl maleate (DEM, ≥96%), triethylene glycol (TEG, 99%), 1,4-butanediol (BD, 99%), 1,6-hexanediol (HD, 99%), neopentylglycol (NPG, 99%), 2,5-dimethyl-2,5-hexanediol (DMHD, 97%), 2-ethyl-1,3-hexanediol (EHD, 97%), glycerol (≥99.5%), trimethylolpropane (TMP, ≥98%), cyclohexylamine (CHA, ≥99.9%), 2-methylcyclohexylamine (MCHA, mixture of cis and trans isomers, 98%), n-butylamine (nBA, 99.5%), tert-butylamine (tBA, 98%), octylamine (OC, 99%), 3-methoxypropylamine (MPA, 99%), 2-ethyl-1-hexylamine (EHA, 98%), n-butyl acetate (99.5%), dibutyltin dilaurate (DBTDL, 95%) and 4-methoxyphenol (MeHQ, 99%) were purchased from Sigma-Aldrich and used as received. Basonat HI 100 (hexamethylene diisocyanate trimer, 88%) was provided by BASF SE and used as received. 1-Pentylamine (PA, 98%) was purchased from Alfa Aesar and used as received. Diethylene glycol (DEG, ≥99.5%) was purchased from Merck and used as received.

### 3. Synthesis protocols

### 3.1. Branched unsaturated polyesters from maleic anhydride (unsaturated polyester I = UPE I)

A series of branched unsaturated polyesters was synthesized from maleic anhydride (MAn), different diols (diethylene glycol (DEG), triethylene glycol (TEG), 1,4-butanediol (BD), 1,6-hexanediol (HD), neopentylglycol (NPG) and 2-ethyl-1,3-hexanediol (EHD)) and two branching reagents (glycerol, trimethylolpropane (TMP)) via polycondensation method. The molar ratio between anhydride, diol and triol was 1:0.5:0.5.

The experimental procedure for the synthesis of all branched unsaturated polyesters was always the same, an example is described below.

Maleic anhydride (11.40 g, 116.3 mmol), neopentylglycol (6.05 g, 58.1 mmol) and trimethylolpropane (7.80 g, 58.1 mmol) were placed in a 100 mL round-bottom flask equipped with a magnetic stirrer bar. The flask was attached to a Liebig condenser with Claisen head and a slow flow of dry N₂ through the head was applied to keep the reaction under inert atmosphere and to improve the removal of water vapors. The reaction system was placed in an oil bath at 140°C for 20 hours. After 20 hours a small amount of MeHQ was dissolved in the polyester and the content of the reaction flask was transferred to a vial.

The following Table summarizes prepared unsaturated polyesters according to the above protocol:

**Table 1. The list of synthesized branched unsaturated polyesters I(reaction conditions: 20h, 140°C, N₂ atmosphere)**

| No. | Polyester | Molar ratio | Comments |
|---|---|---|---|
| 1 | MAn + neopentylglycol + TMP | 1:0.5:0.5 | transparent solid |
| 2 | MAn + 2-ethyl-1,3-hexanediol + TMP | 1:0.5:0.5 | transparent solid |
| 3 | MAn + butanediol + TMP | 1:0.5:0.5 | transparent solid |
| 4 | MAn + butanediol + glycerol | 1:0.5:0.5 | transparent solid |
| 5 | MAn + hexanediol + TMP | 1:0.5:0.5 | transparent solid |
| 6 | MAn + diethyleneglycol + TMP | 1:0.5:0.5 | transparent solid |
| 7 | MAn + triethyleneglycol + TMP | 1:0.5:0.5 | transparent solid |

The branched unsaturated polyesters were used for investigations without further purification. The molar masses, viscosities, total acid numbers, hydroxyl numbers and glass transition temperatures of chosen polyesters were determined.

**Table 2a. Properties of branched unsaturated polyesters I.**

| | | GPC in DMAc | | GPC in THF | |
|---|---|---|---|---|---|
| No. | Polyester | Mₙ [g/mol] | Ð | Mₙ [g/mol] | Ð |
| 1 | MAn + neopentylglycol + TMP | 1920 | 2.63 | 1060 | 1.45 |
| 2 | MAn + 2-ethyl-1,3-hexanediol + TMP | 1220 | 1.75 | - | - |
| 3 | MAn + butanediol + TPM | 1910 | 2.69 | 980 | 1.38 |
| 4 | MAn + butanediol + glycerol | 1230 | 1.76 | - | - |
| 5 | MAn + hexanediol + TMP | 2200 | 2.97 | 1370 | 1.59 |
| 6 | MAn + diethyleneglycol + TMP | 860 | 1.42 | - | - |
| 7 | MAn + triethyleneglycol + TMP | 1210 | 1.51 | 880 | 1.32 |

**Table 2b. Properties of linear and branched unsaturated polyesters.**

| No. | Solubility in butyl acetate (65 wt%) | Viscosity [mPa•s] | AN [mg KOH/g sample] | HN [mg KOH/g sample] | f or Mₙₜₕ calculated from HN | T_{g} [°C] | % cis* |
|---|---|---|---|---|---|---|---|
| 1 | S1 | 1030 | 55.0 | 201.8 | 6.9 | 30 | 83 |
| 2 | S1 | 348 | 96.7 | 203.7 | 4.4 | 19 | 79 |
| 3 | S1 | 915 | 51.7 | 192.2 | 6.5 | 16 | 86 |
| 4 | I2 | - | - | - | - | - | - |
| 5 | S1 | 659 | 39.9 | 190.9 | 7.5 | -5 | 84 |
| 6 | I1 | - | 103.7 | 258.3 | 4.0 | 14 | 87 |
| 7 | I1 | - | 67.6 | 221.7 | 4.8 | -2 | 79 |

| | | | | | | | |
|---|---|---|---|---|---|---|---|
| AN - total acid number; HN - hydroxyl number; S1 - soluble, transparent, very viscous; S2 - soluble, transparent, viscous; I1 - 2 phases, milky dispersion when shaken; I2 - insoluble, 2 phases; f - functionalization degree, number of hydroxyl and carboxyl groups per chain; *% of cis double bonds (maleate units) in comparison with all double bonds (maleate and fumarate double bonds signals in ¹H NMR spectra of samples); | | | | | | | |

### 3.2. Aza-Michael Addition of primary monoamines to branched unsaturated polyesters I

The Aza-Michael reactions between chosen branched unsaturated polyester and eight primary monoamines (cyclohexylamine (CHA), 2-methylcyclohexylamine (2-MCHA), n-butylamine (BA), tert-butylamine (t-BA), pentylamine (PA), octylamine (OC), 3-methoxypropylamine (MPA) and 2-ethyl-1-hexylamine (EHA)) were carried out in n-butyl acetate at 65 wt% concentration of the polyaspartic acid ester.

The experimental procedure for the synthesis of all polyaspartic acid esters was always the same, an example is described below.

Branched unsaturated polyester of maleic anhydride, neopentylglycol and trimethylolpropane (1.21 g, 6.08 mmol of double bonds) was placed in 5 mL vial with a screw cap and a magnetic stirring bar. Then 1.22 mL (1.08 g) of n-butyl acetate was added to the vial, the vial was tightly closed and placed on a magnetic stirrer for 24h at RT (complete dissolution of polyester). After 24h the 2-ethyl-1-hexylamine (0.996 mL, 0.786 g, 6.08 mmol) was added to the vial, the vial was tightly closed and placed on a magnetic stirrer for 48h at RT. The photos of samples after 24h, 48h and two weeks were taken.

The synthesized polyaspartic acid esters were used for investigations without further purification (the n-butyl acetate was evaporated for some analyses). The molar masses, viscosities, glass transition temperatures and onset temperatures of decomposition of chosen polyaspartic acid esters were determined.

**Table 3a. Properties of branched polyaspartic acid esters PAE synthesized from respective UPE and 2-ethyl-1-hexylamine**

| No. | The polyester used for the synthesis of PAE | Viscosity of PAE after 48h [mPa•s] | Mₙ of PAE-I [g/mol] |
|---|---|---|---|
| A1 | MAn + Neopentylglycol + TMP | 875 | 3720 (D=2.35) |
| A2 | MAn + 2-ethyl-1,3-hexanediol + TMP | 737 | 1680 (D=1.69) |
| A3 | MAn + Butanediol + TPM | 842 | 4230 (D=2.41) |
| A5 | MAn + Hexanediol + TMP | 475 | 3480 (D=2.66) |
| A6 | MAn + Diethyleneglycol + TMP | 668 | 2430 (D=1.47) |
| A7 | MAn + Triethyleneglycol + TMP | 348 | 2800 (D=1.77) |

**Table 3b.**

| No. | The polyester used for the synthesis of PAE-I | T_{g} [°C] (DSC) | Tₒ^{#} [°C] (TGA) | Comments after 48h |
|---|---|---|---|---|
| A1 | MAn + Neopentylglycol + TMP | -25 | 189 | clear, viscous solution |
| A2 | MAn + 2-ethyl-1,3-hexanediol + TMP | -23 | 184 | clear, viscous solution |
| A3 | MAn + Butanediol + TPM | -35 | 197 | clear, viscous solution* |
| A5 | MAn + Hexanediol + TMP | -24 | 204 | clear, viscous solution |
| A6 | MAn + Diethyleneglycol + TMP | -26 | 178 | clear, viscous solution |
| A7 | MAn + Triethyleneglycol + TMP | -34 | 199 | clear, viscous solution |

| | | | | |
|---|---|---|---|---|
| *a bit yellowish after 1 week; ^{#}Tₒ - onset temperature of decomposition | | | | |

### 3.3. Aza-Michael addition of 2-ethyl-1-hexylamine to branched unsaturated polyester of maleic anhydride, 2-ethyl-1,3-hexanediol and TMP in bulk

The branched unsaturated polyester of maleic anhydride, 2-ethyl-1,3-hexanediol and trimethylolpropane was synthesized according to the procedure described in chapter 3.4 (instead of the one-neck flask a three-neck flask was used and the magnetic stirrer was replaced with a mechanical stirrer). The standard 1:0.5:0.5 anhydride, diol and triol molar ratio was used, the synthesis was carried out for 11.40 g of maleic anhydride (116.3 mmol).

After 20h of the polycondensation reaction, a dropping funnel with 2-ethyl-1-hexylamine (19.04 mL, 15.02 g, 116.3 mmol) and reflux condenser were attached to the flask with polyester under nitrogen flow. The amine was added dropwise to the stirred polyester at 140°C over a 1h period. The Aza-Michael reaction was continued for next 23h at 140°C. Next day the flask was cooled to RT and the content was transferred to a vial. The molar mass and glass transition temperature of the branched polyaspartic acid ester I were determined.

### 3.4. Synthesis of branched unsaturated polyesters with diethyl maleate (DEM) (Unsaturated Polyester II = UPE II)

The branched unsaturated polyesters were synthesized from diethyl maleate, trimethylolpropane and two different diols: 1,6-hexanediol and triethyleneglycol via polycondensation method. The molar ratio between maleate, diols and triol were 1:0.5:0.5 or 1.1:0.5:0.5.

An example of an experimental procedure for the synthesis of branched unsaturated polyesters is described below.

Diethyl maleate (385 g, 2.24 mol), hexanediol (120.10 g, 1.02 mol), trimethylolpropane (136.37 g, 1.02 mol) and dibutyltin dilaurate (1.41 g, 1.32 mL, 2.23 mmol) were placed in a 1 L two-neck round-bottom flask equipped with a mechanical stirrer with PTFE blade. The flask was attached to a Liebig condenser with a Claisen head and a slow flow of dry N₂ through the head was applied to keep the reaction under an inert atmosphere. The reaction system was placed in an oil bath at 160°C for 10 hours. During the first 2h, the reaction mixture was kept under N₂ flow than the pressure in the system was gradually reduced to 50 mbar using a vacuum pump. After 10 hours a 660 mg of MeHQ was dissolved in the polyester and the content of the reaction flask was transferred to a bottle.

The branched unsaturated polyesters were used for further investigations without purification. The molar masses, viscosities, total acid numbers, hydroxyl numbers and glass transition temperatures of polyesters were determined.

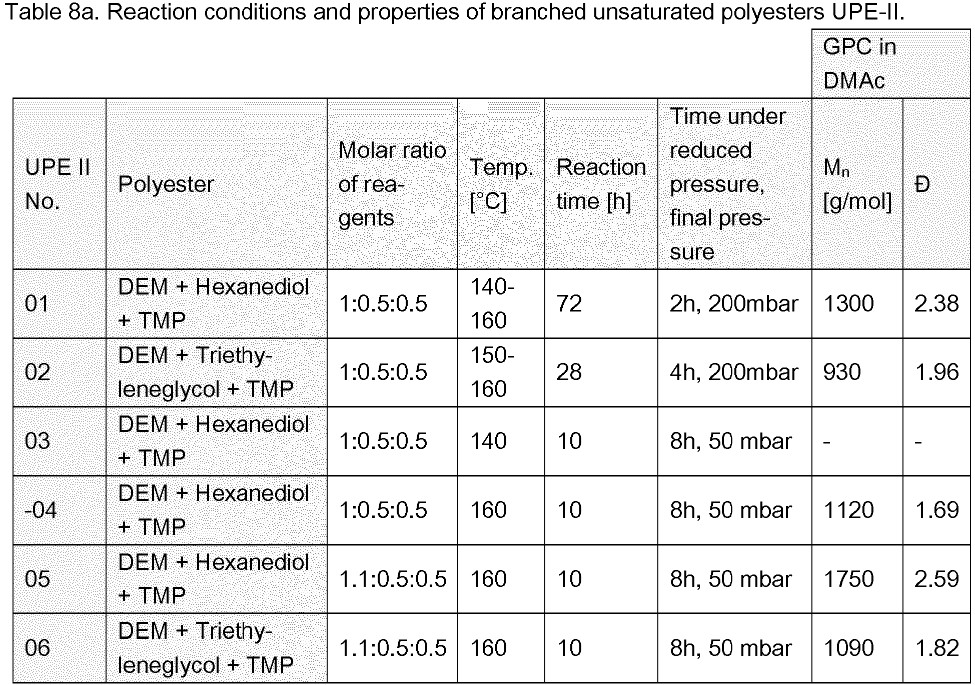

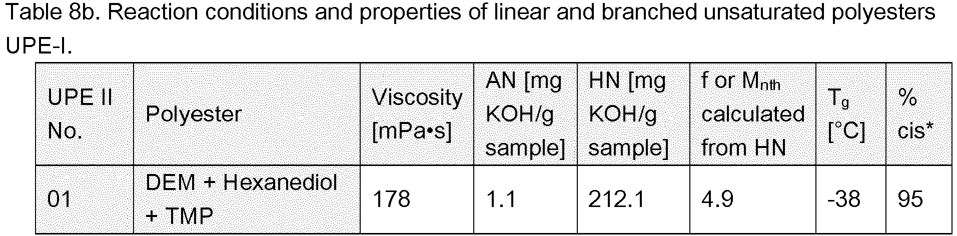

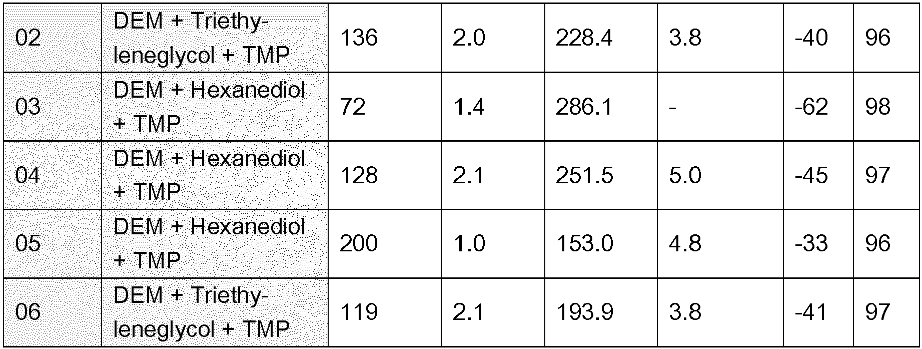

### 3.5. Aza-Michael addition of 2-ethyl-1-hexylamine to branched unsaturated polyester II

The Aza-Michael reactions between chosen linear/branched unsaturated polyester and 2-ethyl-1-hexylamine were carried out in n-butyl acetate at 65 wt% concentration of the polyaspartic acid ester.

The experimental procedure for the synthesis of all polyaspartic acid esters was always the same, an example is described below.

Branched unsaturated polyester of diethyl maleate, hexanediol and trimethylolpropane (357.50 g, 1.74 mol of double bonds) was placed in 1 L bottle with a magnetic stirring bar. Then 355.18 mL (313.27 g) of n-butyl acetate was added to the bottle, the bottle was tightly closed and placed on a stirrer for 24h at RT (complete dissolution of polyester). After 24h 284.27 mL of 2-ethyl-1-hexylamine (224.29 g, 1.74 mol) was added to the stirred solution from a dropping funnel (during the 2h period), then the bottle was tightly closed and stirred for 48h at RT.

The synthesized polyaspartic acid esters were used for investigations without further purification (the n-butyl acetate was evaporated for some analyses). The molar masses, viscosities and glass transition temperatures of chosen polyaspartic acid esters were determined.

**Table 9. Properties of branched polyaspartic acid esters PAE-II synthesized from respective UPE-II and 2-ethyl-1-hexylamine in ~0.5kg scale.**

| PAE II No. | The polyester used for the synthesis of PAE-I | Viscosity of PAE-I after 48h [mPa•s] | Mₙ of PAE-I [g/mol] | T_{g} [°C] | Comments after 48h |
|---|---|---|---|---|---|
| 01 | UPE-I-01 (DEM + Hexanediol + TMP) | 126 | 1530 (D=2.11) | -53 | clear, orange colored, viscous solution |
| 02 | UPE-I-02 (DEM + Triethyleneglycol + TMP) | 88 | 1250 (D=1.81) | -53 | clear, orange colored, viscous solution |

### 3.6. Reactivity of branched polyaspartic esters in reaction with HDI isocyanurate trimer

The reactivity of chosen polyasparticesters was investigated in reaction with Basonat HI 100 (HDI isocyanurate). The molar ratio between ester and Basonat HI 100 was always equal in terms of reactive groups content - OH/NH groups in polyester vs NCO groups in Basonat HI 100. The experimental procedure was always the same, two examples are described below.

For the reaction of PAE-II-1 and Basonat HI 100:
2 g of 65wt% solution of PAE-I-1 (3.87 mmol of NH groups) was placed in 10 mL vial equipped with a magnetic stirrer. Then 0.74 g of Basonat HI 100 (3.87 mmol of NCO groups) was added to the stirred solution and the pot life of the mixture was measured with a stopwatch.

For the reaction of UPE-II-1 and Basonat HI 100:
3 g of 65wt% solution of UPE-II-1 (7.37 mmol of OH groups) was placed in 10 mL vial equipped with a magnetic stirrer. Then 1.41 g of Basonat HI 100 (7.37 mmol of NCO groups) was added to the stirred solution and the pot life of the mixture was measured with a stopwatch.

**Table10. Comparison of the reactivity of unsaturated polyesters (UPE-I-01 and UPE-I-02), polyaspartic acid esters (PAE-I-01, 02, 03 and 05) and Jeffamine in reaction with Basonat HI 100.**

| No. | PAE-II, UPE-II or amine (65wt% in butyl acetate) | mmole OH/g PAE-II/UPE II | mmole NH/g PAE-l/amine | Pot life [min] | Comments |
|---|---|---|---|---|---|
| 1 | PAE-II-01 (UPE II 01 + 2-ethyl-1-hexylamine) | 2.32 | 2.98 | 0:30 | exothermic reaction, clear, poorly mixed, very brittle |
| 2 | UPE II 01 (DEM + Hexanediol + TMP) | 3.78 | - | 9:30 | clear, well mixed, brittle |
| 3 | PAE-II 02 (UPE II 02 + 2-ethyl-1-hexylamine) | 2.57 | 2.85 | 0:50 | exothermic reaction, clear, poorly mixed, very brittle |
| 4 | UPE II 02 (DEM + Triethyleneglycol + TMP) | 4.07 | - | 17:00 | milky during first 2:30 min then clear, well mixed, brittle |
| 5 | PAE-II-01 (UPE II 01 + 2-ethyl-1-hexylamine) | 2.32 | 2.98 | 0:33 | exothermic reaction, clear, poorly mixed, brittle |
| 6 | PAE-II-02 (UPE II 02 + 2-ethyl-1-hexylamine) | 2.57 | 2.85 | 0:42 | exothermic reaction, clear, poorly mixed, brittle |

## Claims

1. A branched polyester formed by an acid component, a diol component and a polyol component, wherein the acid component comprises an amino dicarboxylic acid of formula (I) 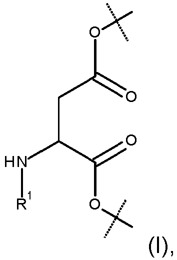
wherein R¹ is hydrogen or a hydrocarbon having 1 to 20 carbon atoms, and wherein in the hydrocarbon one or more carbon atoms can be replaced by an oxygen, provided that the replaced carbon is not a primary carbon atom and in case of more than one oxygen replacing carbon atoms, at least two carbon atoms are between adjacent oxygen atoms, wherein the diol component comprises a diol,
wherein the polyol component comprises a polyol having at least three hydroxyl groups, preferably a triol or tetrol, more preferably a triol;
and wherein the acid component forms carboxylic acid ester groups with the diol component and the polyol component and the dashed lines indicate the bondage to the diol or the polyol via the commonly shared oxygen,
**characterized in that** the molar ratio of diol component and polyol component is in the range from 2:1 to 1:2.

2. The branched polyester of claim 1, wherein the acid component consists of one amino dicarboxylic acid.

3. The branched polyester of claim 1 or 2, wherein R¹ is a hydrocarbon having 1 to 20 carbon atoms, and wherein in the hydrocarbon one or more carbon atoms can be replaced by an oxygen, provided that the replaced carbon is not a primary carbon atom and in case of more than one oxygen replacing carbon atoms, at least two carbon atoms are between adjacent oxygen atoms, preferably a hydrocarbon having 3 to 10 carbon atoms, wherein one or two carbon atoms can be replaced by an oxygen atom.

4. The branched polyester of any of claims 1 to 3, wherein R¹ is selected from the group consisting of n-butyl, tert.-butyl, n-pentyl, n-octyl, 2-ethyl-1-hexyl, cyclohexyl, 2-methylcyclohexyl and 3-methoxypropyl, preferably 2-ethyl-1-hexyl.

5. The branched polyester of any of claims 1 to 4, wherein the diol component consists of one diol.

6. The branched polyester of any of claims 1 to 5, wherein the diol is selected from the group consisting of triethylene glycol, diethylene glycol, 1,4-butanediol, 1,6-hexandiol, neopentylglycol, 2,5-dimethyl-2,5-hexandiol and 2-ethyl-1,3-hexandiol.

7. The branched polyester of any of claims 1 to 6, wherein the polyol component consists of one polyol, preferably a triol or tetrol, more preferably a triol.

8. The branched polyester of any of claims 1 to 7, wherein the polyol is a triol and preferably the triol is glycerol, butane-1,2,4-triol, n-pentane-1,2,5-triol, n-pentane-1,3,5-triol, n-hexane-1,2,6-triol, n-hexane-1,2,5-triol, n-hexane-1,3,6-triol, trimethylolbutane, trimethylolpropane, trimethylolethane, trimethylolmethane or mixtures of the above trifunctional alcohols or alkoxylates thereof, preferably the triol is trimethylolpropane or glycerol, preferably trimethylolpropane.

9. The branched polyester of any of claims 1 to 8, wherein the molar ratio of diol component and polyol component is in the range from 1.5:1 to 1:1.5.

10. The branched polyester of any of claims 1 to 9, wherein the molar ratio of acid component to the sum of diol component and polyol component is in the range from 1:2 to 2:1.

11. A process for preparing a branched polyester of any of claims 1 to 10, comprising the steps
(a) reacting an acid component with a mixture of a diol component and a polyol component, wherein the acid component comprises an activated maleic acid or activated fumaric acid, preferably an activated maleic acid, wherein the diol component comprises a diol, wherein the polyol component comprises a polyol
and wherein the acid component forms carboxylic acid ester groups with the diol component and the polyol component, **characterized in that** the molar ratio of diol component and polyol component is in the range from 2:1 to 1:2;
(b) reacting the resulting product from step (a) with R¹-NH₂ in an aza-Michael addition reaction, wherein R¹ has the meaning as indicated in claim 1, resulting in the branched polyester.

12. The process of claim 11, wherein the acid component consists of one activated maleic acid or one activated fumaric acid, preferably one activated maleic acid.

13. The process of claim 11 or 12, wherein the activated maleic acid is maleic anhydride, a diester of maleic acid with a C₁₋₄ alkyl alcohol or a dihalide of maleic acid, preferably maleic anhydride.

14. A reaction product of a branched polyester of any of claims 1 to 10 with an isocyanate with a functionality of 2 or higher than 2.

15. Use of a reaction product of claim 14 in adhesives, printing inks, coatings, foams, coverings and paints.

## Patentansprüche

1. Verzweigter Polyester, gebildet aus einer Säurekomponente, einer Diolkomponente und einer Polyolkomponente, wobei die Säurekomponente eine Aminodicarbonsäure der Formel (I) umfasst, 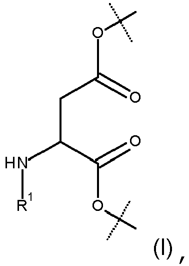
wobei R¹ für Wasserstoff oder einen Kohlenwasserstoff mit 1 bis 20 Kohlenstoffatomen steht und wobei in dem Kohlenwasserstoff ein oder mehrere Kohlenstoffatome durch einen Sauerstoff ersetzt sein können, vorausgesetzt, dass es sich bei dem ersetzten Kohlenstoff nicht um ein primäres Kohlenstoffatom handelt und im Fall von mehr als einem Kohlenstoffatom ersetzenden Sauerstoff mindestens zwei Kohlenstoffatome zwischen benachbarten Sauerstoffatomen liegen, wobei die Diolkomponente ein Diol umfasst,
wobei die Polyolkomponente ein Polyol mit mindestens drei Hydroxylgruppen, vorzugsweise ein Triol oder Tetrol, weiter bevorzugt ein Triol, umfasst;
und wobei die Säurekomponente mit der Diolkomponente und der Polyolkomponente Carbonsäureestergruppen bildet und die gestrichelten Linien die Bindung an das Diol bzw. das Polyol über den gemeinsam geteilten Sauerstoff anzeigen,
**dadurch gekennzeichnet, dass** das Molverhältnis von Diolkomponente und Polyolkomponente im Bereich von 2:1 bis 1:2 liegt.

2. Verzweigter Polyester nach Anspruch 1, wobei die Säurekomponente aus einer einzigen Aminodicarbonsäure besteht.

3. Verzweigter Polyester nach Anspruch 1 oder 2, wobei R¹ für einen Kohlenwasserstoff mit 1 bis 20 Kohlenstoffatomen steht und wobei in dem Kohlenwasserstoff ein oder mehrere Kohlenstoffatome durch einen Sauerstoff ersetzt sein können, vorausgesetzt, dass es sich bei dem ersetzten Kohlenstoff nicht um ein primäres Kohlenstoffatom handelt und im Fall von mehr als einem Kohlenstoffatome ersetzenden Sauerstoff mindestens zwei Kohlenstoffatome zwischen benachbarten Sauerstoffatomen liegen, vorzugsweise ein Kohlenwasserstoff mit 3 bis 10 Kohlenstoffatomen, wobei ein oder zwei Kohlenstoffatome durch ein Sauerstoffatom ersetzt sein können.

4. Verzweigter Polyester nach einem der Ansprüche 1 bis 3, wobei R¹ aus der Gruppe bestehend aus n-Butyl, tert.-Butyl, n-Pentyl, n-Octyl, 2-Ethyl-1-hexyl, Cyclohexyl, 2-Methylcyclohexyl und 3-Methoxypropyl, vorzugsweise 2-Ethyl-1-hexyl, ausgewählt ist.

5. Verzweigter Polyester nach einem der Ansprüche 1 bis 4, wobei die Diolkomponente aus einem einzigen Diol besteht.

6. Verzweigter Polyester nach einem der Ansprüche 1 bis 5, wobei das Diol aus der Gruppe bestehend aus Triethylenglykol, Diethylenglykol, 1,4-Butandiol, 1,6-Hexandiol, Neopentylglykol, 2,5-Dimethyl-2,5-hexandiol und 2-Ethyl-1,3-hexandiol ausgewählt ist.

7. Verzweigter Polyester nach einem der Ansprüche 1 bis 6, wobei die Polyolkomponente aus einem einzigen Polyol, vorzugsweise einem Triol oder Tetrol, weiter bevorzugt einem Triol, besteht.

8. Verzweigter Polyester nach einem der Ansprüche 1 bis 7, wobei es sich bei dem Polyol um ein Triol handelt und es sich bei dem Triol vorzugsweise um Glycerin, Butan-1,2,4-triol, n-Pentan-1,2,5-triol, n-Pentan-1,3,5-triol, n-Hexan-1,2,6-triol, n-Hexan-1,2,5-triol, n-Hexan-1,3,6-triol, Trimethylolbutan, Trimethylolpropan, Trimethylolethan, Trimethylolmethan oder Mischungen der obigen trifunktionellen Alkohole oder Alkoxylate davon handelt und es sich vorzugsweise bei dem Triol um Trimethylolpropan oder Glycerin, vorzugsweise Trimethylolpropan, handelt.

9. Verzweigter Polyester nach einem der Ansprüche 1 bis 8, wobei das Molverhältnis von Diolkomponente und Polyolkomponente im Bereich von 1,5:1 bis 1:1,5 liegt.

10. Verzweigter Polyester nach einem der Ansprüche 1 bis 9, wobei das Molverhältnis von Säurekomponente zur Summe von Diolkomponente und Polyolkomponente im Bereich von 1:2 bis 2:1 liegt.

11. Verfahren zur Herstellung eines verzweigten Polyesters nach einem der Ansprüche 1 bis 10, das folgende Schritte umfasst:
(a) Umsetzen einer Säurekomponente mit einer Mischung aus einer Diolkomponente und einer Polyolkomponente, wobei die Säurekomponente eine aktivierte Maleinsäure oder aktivierte Fumarsäure, vorzugsweise eine aktivierte Maleinsäure, umfasst, wobei die Diolkomponente ein Diol umfasst und wobei die Polyolkomponente ein Polyol umfasst,
und wobei die Säurekomponente mit der Diolkomponente und der Polyolkomponente Carbonsäureestergruppen bildet, **dadurch gekennzeichnet, dass** das Molverhältnis von Diolkomponente und Polyolkomponente im Bereich von 2:1 bis 1:2 liegt;
(b) Umsetzen des erhaltenen Produkts aus Schritt (a) mit R¹-NH₂ in einer Aza-Michael-Additionsreaktion, wobei R¹ die in Anspruch 1 angegebene Bedeutung hat, was den verzweigten Polyester ergibt.

12. Verfahren nach Anspruch 11, wobei die Säurekomponente aus einer einzigen aktivierten Maleinsäure oder einer einzigen aktivierten Fumarsäure, vorzugsweise einer einzigen aktivierten Maleinsäure, besteht.

13. Verfahren nach Anspruch 11 oder 12, wobei es sich bei der aktivierten Maleinsäure um Maleinsäureanhydrid, einen Diester von Maleinsäure mit einem C₁₋₄-Alkylalkohol oder ein Dihalogenid von Maleinsäure, vorzugsweise Maleinsäureanhydrid, handelt.

14. Umsetzungsprodukt eines verzweigten Polyesters nach einem der Ansprüche 1 bis 10 mit einem Isocyanat mit einer Funktionalität von 2 oder mehr als 2.

15. Verwendung eines Umsetzungsprodukts nach Anspruch 14 in Klebstoffen, Druckfarben, Beschichtungen, Schaumstoffen, Überzügen und Lacken.

## Revendications

1. Polyester ramifié formé par un composant acide, un composant diol et un composant polyol, dans lequel le composant acide comprend un acide amino dicarboxylique de formule (I) 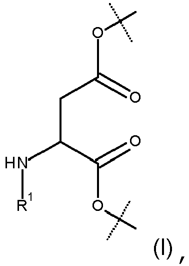
dans lequel R¹ est hydrogène ou un hydrocarbure ayant 1 à 20 atomes de carbone, et dans lequel, dans l'hydrocarbure, un ou plusieurs atomes de carbone peuvent être remplacés par un oxygène, à condition que le carbone remplacé ne soit pas un atome de carbone primaire et, dans le cas de plus d'un oxygène remplaçant des atomes de carbone, au moins deux atomes de carbone se trouvent entre des atomes d'oxygène adjacents, dans lequel le composant diol comprend un diol,
dans lequel le composant polyol comprend un polyol ayant au moins trois groupes hydroxyle, de préférence un triol ou tétrol, plus préférablement un triol ;
et dans lequel le composant acide forme des groupes ester d'acide carboxylique avec le composant diol et le composant polyol et les lignes en pointillés indiquent la liaison au diol ou au polyol via l'oxygène communément partagé,
**caractérisé en ce que** le rapport molaire du composant diol et du composant polyol est dans la plage de 2:1 à 1:2.

2. Polyester ramifié selon la revendication 1, dans lequel le composant acide est constitué d'un acide amino dicarboxylique.

3. Polyester ramifié selon la revendication 1 ou 2, dans lequel R¹ est un hydrocarbure ayant 1 à 20 atomes de carbone, et dans lequel, dans l'hydrocarbure, un ou plusieurs atomes de carbone peuvent être remplacés par un oxygène, à condition que le carbone remplacé ne soit pas un atome de carbone primaire et, dans le cas de plus d'un oxygène remplaçant des atomes de carbone, au moins deux atomes de carbone se trouvent entre des atomes d'oxygène adjacents, de préférence un hydrocarbure ayant 3 à 10 atomes de carbone, dans lequel un ou deux atomes de carbone peuvent être remplacés par un atome d'oxygène.

4. Polyester ramifié selon l'une quelconque des revendications 1 à 3, dans lequel R¹ est sélectionné dans le groupe constitué par n-butyle, tert.-butyle, n-pentyle, n-octyle, 2-éthyl-1-hexyle, cyclohexyle, 2-méthylcyclohexyle et 3-méthoxypropyle, de préférence 2-éthyl-1-hexyle.

5. Polyester ramifié selon l'une quelconque des revendications 1 à 4, dans lequel le composant diol est constitué d'un diol.

6. Polyester ramifié selon l'une quelconque des revendications 1 à 5, dans lequel le diol est sélectionné dans le groupe constitué par triéthylène glycol, diéthylène glycol, 1,4-butanediol, 1,6-hexandiol, néopentyglycol, 2,5-diméthyl-2,5-hexandiol et 2-éthyl-1,3-hexandiol.

7. Polyester ramifié selon l'une quelconque des revendications 1 à 6, dans lequel le composant polyol est constitué d'un polyol, de préférence un triol ou un tétrol, plus préférablement un triol.

8. Polyester ramifié selon l'une quelconque des revendications 1 à 7, dans lequel le polyol est un triol et de préférence le triol est glycérol, butane-1,2,4-triol, n-pentane-1,2,5-triol, n-pentane-1,3,5-triol, n-hexane-1,2,6-triol, n-hexane-1,2,5-triol, n-hexane-1,3,6-triol, triméthylolbutane, triméthylolpropane, triméthyloléthane, triméthylolméthane ou mélanges des alcools ou des alkoxylates trifonctionnels ci-dessus, de préférence le triol est triméthylolpropane ou glycérol, de préférence triméthylpropane.

9. Polyester ramifié selon l'une quelconque des revendications 1 à 8, dans lequel le rapport molaire du composant diol et du composant polyol est dans la plage de 1,5:1 à 1:1,5.

10. Polyester ramifié selon l'une quelconque des revendications 1 à 9, dans lequel le rapport molaire du composant acide sur la somme du composant diol et du composant polyol est dans la plage de 1:2 à 2:1.

11. Procédé de préparation d'un polyester ramifié selon l'une quelconque des revendications 1 à 10, comprenant les étapes
(a) mise en réaction d'un composant acide avec un mélange d'un composant diol et d'un composant polyol, dans lequel le composant acide comprend un acide maléique activé ou un acide fumarique activé, de préférence un acide maléique activé, dans lequel le composant diol comprend un diol, dans lequel le composant polyol comprend un polyol
et dans lequel le composant acide forme des groupes ester d'acide carboxylique avec le composant diol et le composant polyol, **caractérisé en ce que** le rapport molaire du composant diol et du composant polyol est dans la plage de 2:1 à 1:2 ;
(b) mise en réaction du produit résultant de l'étape (a) avec R¹-NH₂ dans une réaction d'addition d'aza-Michael, dans lequel R¹ a la signification indiquée dans la revendication 1, résultant en le polyester ramifié.

12. Procédé selon la revendication 11, dans lequel le composant acide est constitué d'un acide maléique activé ou d'un acide fumarique activé, de préférence un acide maléique activé.

13. Procédé selon la revendication 11 ou 12, dans lequel l'acide maléique activé est anhydride maléique, un diester d'acide maléique avec un alcool d'alkyle en C₁₋₄ ou un dihalogénure d'acide maléique, de préférence un anhydride maléique.

14. Produit de réaction d'un polyester ramifié selon l'une quelconque des revendications 1 à 10 avec un isocyanate doté d'une fonctionnalité de 2 ou supérieure à 2.

15. Utilisation d'un produit de réaction selon la revendication 14 dans des adhésifs, des encres d'impression, des revêtements, des mousses, des couvertures et des peintures.
